Europäisches Patentamt
European Patent Office
Office européen des brevets

(19)

(11) Publication number: **0 268 042 A2**

(12) **EUROPEAN PATENT APPLICATION**

(21) Application number: **87113994.5**

(22) Date of filing: **24.09.87**

(51) Int. Cl.4: **C08F 214/08**, C08L 27/08, C09D 3/74, C09D 5/08

(30) Priority: **22.10.86 JP 249752/86**

(43) Date of publication of application: **25.05.88 Bulletin 88/21**

(84) Designated Contracting States: **DE FR GB IT**

(71) Applicant: **KUREHA KAGAKU KOGYO KABUSHIKI KAISHA**
**9-11 Horidome-cho 1-chome Nihonbashi**
**Chuo-ku**
**Tokyo 103(JP)**

(72) Inventor: **Suzuki, Masayasu**
**No. 43-6, Yanagi-machi Ushiroda-machi**
**Iwaki-shi Fukushima(JP)**
Inventor: **Segawa, Susumu**
**No. 269-1, Kamiyama Iwama-machi**
**Iwaki-shi Fukushima(JP)**
Inventor: **Tomizawa, Toshikazu**
**No. 70-2, Eguri 2-chome Nishiki-machi**
**Iwaki-shi Fukushima(JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22(DE)**

(54) **Rust preventive coating composition.**

(57) Provided is a rust preventive coating composition comprising, in terms of solids, 100 parts by weight of a vinylidene chloride latex and 0.5 - 50 parts by weight of a tannic substance. The vinylidene chloride latex is obtained by emulsion-polymerizing in the presence of an anionic emulsifier a 10 - 50 parts by weight portion of 100 parts by weight of a monomer mixture composed of 20 - 95 wt.% of vinylidene chloride and 5 - 80 wt.% of a comonomer, adding the remaining portion of the monomer mixture and 0.1 - 3.0 parts by weight of a polymerizable emulsifier formed of at least one of styrene sulfonic salts and alkylallylsulfosuccinic salts to the resulting latex and then emulsion-polymerizing the resultant mixture. The composition exhibits superb rust preventive effects when applied to iron and iron alloys. Although the vinylidene chloride latex is acidic, it is not coagulated by the addition of the tannic substance so that the tannic substance is contained in a state dispersed stably. It is also feasible to incorporate an organic acid, which promotes chelation of the tannic substance, and/or an alcohol which improves coatability.

EP 0 268 042 A2

# RUST PREVENTIVE COATING COMPOSITION

## BACKGROUND OF THE INVENTION

1) Field of the Invention:

This invention relates to a rust preventive coating composition suitable for use in coating a surface of iron or an iron alloy in order to prevent occurrence of rust.

2) Description of the Prior Art:

As rust preventive methods for iron and its alloys, coating of a rust preventive paint, plating, electrolytic protection and like measures have been known in general. It is widely practised to apply a rust preventive paint for its readiness in work and its economy in order to protect large metal products and metallic structural materials, such as vehicles, ships, bridges and tanks, from rusting.

Rust preventive paints known to date are however insufficient in various respects. Rust preventive effects which they can exhibit are affected by the surface conditions of articles to be coated. They cannot achieve perfect prevention of occurrence of rust on articles coated therewith, since their rust preventive effects are affected, for example, by the degree of surface ruggedness or roughness of the articles to be coated or by substances still remaining on the surfaces of the articles to be coated or properties of the paints themselves are insufficient.

As rust preventive paints for iron and its alloys, those containing tannin or tannic acid as a component are presently known as disclosed in Japanese Patent Laid-Open Nos. 139155/1982 and 149966/1983 by way of example. However, their rust preventive performance is by no means satisfactory.

The present inventors have carried out an extensive investigation with respect to rust preventive paints. As a result, it has been found that a rust preventive paint is supposed to have the following properties in order to show excellent rust preventive performance.

(1) The rust preventive paint should have surface-cleaning effects, for example, should be able to dissolve rust on the surface of an article to be coated.

(2) The rust preventive paint does not chemically coagulate on the surface of an article to be coated and the resulting coating film should be smooth and should adhere firmly the surface of the article.

(3) The resulting coating film should have excellent barrier properties against external moisture and oxygen.

(4) On the metal surface of an article to be coated, the rust preventive paint and the metal should bond together so that a so-called "passive-state substance" is formed there.

No rust preventive paint equipped with all the above properties have however been known to date.

## SUMMARY OF THE INVENTION

An object of this invention is to provide a rust preventive coating composition having such properties as mentioned above.

In one aspect of this invention, there is thus provided a rust preventive coating composition comprising, in terms of solids, 100 parts by weight of a vinylidene chloride latex and 0.5 - 50 parts by weight of a tannic substance. The vinylidene chloride latex is obtained by emulsion-polymerizing in the presence of 0.05 - 0.5 parts by weight of an anionic emulsifier a 10 - 50 parts by weight portion of 100 parts by weight of a monomer mixture composed of 20 - 95 wt.% of vinylidene chloride and 5 - 80 wt.% of a monomer copolymerizable with vinylidene chloride to obtain a latex, adding the remaining portion of the monomer mixture and 0.1 - 3.0 parts by weight of a polymerizable emulsifier formed of at least one of styrene sulfonic salts and alkylallylsulfosuccinic salts to the thus-obtained latex and then emulsion-polymerizing the resultant mixture. Preferably, the rust preventive coating composition of this invention additionally contain 0.05 - 20 parts by weight of an organic acid and/or 1.0 - 100 parts by weight of an alcohol.

The rust preventive coating composition of this invention can exhibit superb rust preventive effects when applied to a surface of iron or an iron alloy. Since the vehicle in the rust preventive coating composition is an acidic latex of a vinylidene chloride copolymer, the resulting coating film has excellent barrier properties and the coating composition also has substantial cleaning effects for the surface of an article to be coated. Moreover, the vinylidene chloride latex is obtained in accordance with the multi-step polymerization technique, in which the anionic emulsifier is used in the former emulsion-polymerization step and the polymerizable emulsifier formed of at least one of styrenesulfonic salts and alkylallylsulfosuccinic salts is employed in the latter emulsion-polymerization step. The vinylidene chloride latex is extremely stable and as a result, the tannic substance is contained in a state dispersed stably without coagulation of the latex. As a consequence, the rust preventive effects inherent to the tannic substance are also exhibited fully. In addition, the latex does not undergo coagulation even when either one or both of the organic acid and alcohol are additionally incorporated. Still better rust preventive effects are hence brought about owing to the organic acid and/or good leveling effects are exhibited due to the alcohol.

## DETAILED DESCRIPTION OF THE INVENTION AND PREFERRED EMBODIMENT

In the present invention, the above-described specific vinylidene chloride latex is used as the entire portion or a portion of a vehicle. Preferably, this vinylidene chloride latex is obtained basically by the process disclosed in Japanese Patent Publication No. 12922/1986.

Specifically, the vinylidene chloride latex may be prepared by:

providing a monomer mixture composed of 20 - 95 wt.% of vinylidene chloride and 5 - 80 wt.% of a monomer copolymerizable with vinylidene chloride;

dividing 100 parts by weight of the monomer mixture into a 10 - 50 parts by weight portion, which is for former-stage polymerization, and the remaining portion for latter-stage polymerization;

emulsion-polymerizing the portion for the former-stage polymerization in the presence of 0.05 - 0.5 parts by weight of an anionic emulsifier to conduct the former-stage polymerization, thereby forming a latex; and

adding the portion for the latter-stage polymerization to the latex obtained by the former-stage polymerization and then emulsion-polymerizing the resultant mixture in the presence of 0.1 - 3.0 parts by weight of a polymerizable emulsifier composed of either one or both of a styrenesulfonic salt and an alkylallylsulfosuccinic salt so as to conduct the latter-stage polymerization.

Incidentally, the term "divided" as used herein should be interpreted in a broad sense. It is hence not an essential requirement that the divided plural portions of the monomer mixture have the same composition. The term "divided" should hence be interpreted to embrace such a situation that the monomer mixture is divided into plural portions of different compositions. Namely, the composition of the monomer mixture polymerized in the former stage and that of the monomer mixture polymerized in the latter stage may be the same or different. It is however essential that each of the divided portions of the monomer mixture contains at least both vinylidene chloride and monomer copolymerizable with vinylidene chloride.

By dividing the monomer mixture into two portions, one for former-stage polymerization and the other for latter-stage polymerization and conducting multi-stage polymerization consisting of the former-stage polymerization and latter-stage polymerization, i.e., making use of the so-called seed polymerization, the sizes of latex particles of the vinylidene chloride latex which serves as a vehicle can be controlled to a suitable range. If the proportion of the portion for the former-stage polymerization should be less than 10 parts by weight of 100 parts by weight of the monomer mixture, the particle size of a latex to be obtained finally will be too large. If it should exceed 50 parts by weight on the other hand, the resulting latex particles will have poor mechanical stability and will precipitate excessively in the course of the polymerization reaction. It is hence not preferred to use the portion for the former-stage polymerization in any proportions outside the above-described range. The portion for the latter-stage polymerization may be added at once or in several smaller portions to the reaction system for its emulsion-polymerization.

The proportion of vinylidene chloride is 20 - 95 wt.%, preferably 50 - 93 wt.%, most preferably 60 - 92 wt.% in the monomer mixture for obtaining the vinylidene chloride latex. A vinylidene chloride proportion smaller than 20 wt.% will result in a latex having low acidity, so that the cleaning effects of the resulting coating composition for the surface of an article to be coated will be reduced and the adhesion of the resulting coating film to the surface of the article will be poor. A vinylidene chloride proportion of 60 wt.% or greater is particularly preferred, since the resulting coating formulation can form a coating film having sufficient barrier properties against moisture and oxygen. If the proportion of vinylidene chloride should exceed 95 wt.%, the resulting vinylidene chloride copolymer will be prone to crystallize rapidly so that latex particles will harden in a short period of time after preparation of the latex and the film-forming ability will hence become insufficient.

As the monomer copolymerizable with vinylidene chloride, may be used one or more vinyl or vinylidene monomers selected from vinyl chloride, methyl acrylate, ethyl acrylate, propyl acrylate, butyl acrylate, 2-ethylhexyl acrylate, octyl acrylate, methyl methacrylate, acrylonitrile, methacrylonitrile, vinyl acetate, styrene, glycidyl acrylate, glycidyl methacrylate, acrylic acid, methacrylic acid, itaconic acid, and the like. The proportion of the copolymerizable monomer is 5 - 80 wt.%, preferably 7 - 50 wt.%, most preferably 8 - 40 wt.% of the monomer mixture. Similar to vinylidene chloride, the copolymerizable monomer is divided into two portions, one for the former-stage polymerization and the other for the latter-stage polymerization.

It is preferable to use crosslinkable glycidyl acrylate or methacrylate as the whole portion or a portion of such a monomer in the former-stage polymerization, because the resulting coating composition can form coating films having excellent toughness.

As already mentioned above, the composition of the copolymerizable monomer portion for the latter-stage polymerization may be the same as or different from that of the copolymerizable monomer portion for the former-stage polymerization. It is hence not absolutely necessary for the copolymerizable monomer, which is to be used in the latter-stage polymerization, to be the same as that to be employed in the former-stage polymerization. It is preferable to use an ethylenically-unsaturated carboxylic acid as a portion of such a monomer in the latter-stage polymerization, because the leveling properties will be improved and a coating composition having good coatability will be obtained. It is particularly preferable to use acrylic acid or methacrylic acid in a proportion of 0.1 - 5 wt.% of the whole monomers.

In the former-stage polymerization, an anionic emulsifier is used as an emulsifier in a proportion of 0.05 - 0.5 parts by weight. If the proportion of the anionic emulsifier is too high, the resulting coating film will be deteriorated in barrier properties. It is hence preferred to use the anionic emulsifier as little as possible so long as the stability of latex particles is assured. Specifically, sodium dodecylbenzenesulfonate, sodium laurylsulfate, sodium alkylnaphthalenesulfonate, sodium alkyldiphenyletherdisulfonate, sodium dialkylsulfosuccinate, sodium alkylsulfonate and other anionic emulsifiers may be used suitably.

If an emulsifier of a different kind, for example, a non-ionic surfactant should be used instead of an anionic emulsifier or together with an anionic emulsifier in the former-stage polymerization, latex particles will coagulate when the resulting vinylidene chloride latex is mixed with a tannic substance to be described subsequently. It will hence be impossible to obtain any rust preventive coating composition having practical utility.

In the latter-stage polymerization, a polymerizable emulsifier formed of at least one of styrenesulfonic salts and alkylallylsulfosuccinic salts is used in a proportion of 0.1 - 3.0 parts by weight. If the emulsifier is not polymerizable, latex particles will be decomposed upon addition of an organic acid and/or alcohol, which are preferable components, so that a stable coating composition will no longer be obtained. Use of a non-ionic emulsifier which is stable to acids and alcohols will cause coagulation of latex particles upon addition of a tannic substance. It is also preferable to use the polymerizable emulsifier as little as feasible so long as the stability of latex particles is assured.

As specific examples of the polymerizable emulsifier, may be mentioned the sodium, potassium and ammonium salts of styrenesulfonic acid, the sodium, potassium and ammonium salts of alkylallylsulfosuccinic acid, etc. It is particularly preferable to use sodium styrenesulfonate or sodium alkylallylsulfosuccinate in the present invention.

The emulsifiers for the former-stage polymerization and the latter-stage polymerization may each be added at once or in several small portions.

In the above-mentioned emulsion polymerization of the monomer mixture, the polymerization yield is as high as substantially 100%. The composition of the resultant copolymer is thus substantially equal to the composition of the monomer mixture. In the vinylidene chloride latex useful in the practice of this invention, the sizes of the latex particles may preferably be 500 - 2,000 Å.

The rust preventive coating composition of this invention can be obtained by combining, 0.5 - 50 parts by weight, preferably, 2.0 - 20 parts by weight in terms of solids of the tannic substance and optionally 0.05 - 20 parts by weight, preferably 0.05 - 5 parts by weight of an organic acid and/or 1.0 - 100 parts by weight of an alcohol with 100 parts by weight in terms of solids of the above-obtained vinylidene chloride latex of pH 1.5 - pH 3 directly, namely, without adjusting the pH of the latter. Other additives may also be added to the rust preventive coating composition as needed.

By the term "tannic substance" as used herein, tannin or tannic acid is meant. Tannin is a substance having a molecular weight of about 600 - 2,000 and contains polyoxyphenyl as its basic structural unit. Tannic acid is a hydrolyzable tannin. Typical examples of tannic acid may include gallotannin, Chinese gallotannin and nutgalls-tannin. The tannic substance is added to the vinylidene chloride latex either as is or in the form of an aqueous solution. When coated on the surface of an article, the tannic substance bonds to a metal of the article, especially, iron to form a chemically stable chelate, namely, a passive-state substance, whereby excellent rust preventive effects are exhibited.

If the proportion of the tannic substance added should be smaller than 0.5 parts by weight, the formation of a chelate will not be achieved to any sufficient extent so that good rust preventive effects cannot be obtained. If its proportion should be in excess of 50 parts by weight on the other hand, the resulting coating composition can form only coating films of reduced strength and is also disadvantageous economically.

In order to facilitate the formation of a chelate of the tannic substance on the surface of an article to be coated and also to stabilize the resulting chelate promptly, it is also possible to add a chelating promoter composed of an ethylenediaminetetracetate (E.D.T.A.) or the like and/or other aids up to 5.0 parts by weight as needed.

The organic acid is a component which is effective for promoting evenly and smoothly the chelating reaction of the tannic substance. If the proportion of the organic acid should be smaller than 0.05 parts by weight, its intended effects will not be derived to any sufficient extent. On the other hand, any proportions greater than 20 parts by weight will encounter difficulties in allowing the rust preventive effects to last over a long period of time. As the organic acid, it is possible to use formic acid, acetic acid, oxalic acid, fumaric acid, malic acid or the like. Of these, acetic acid is particularly suitable. If necessary, it is also feasible to add together with such an organic acid an inorganic acid such as hydrochloric acid or nitric acid up to 5.0 parts by weight. Use of such an inorganic acid has an advantage that the cleaning effects for the surface of an article to be coated is improved further.

Incorporation of the alcohol can provide a composition having improved properties as a paint. The alcohol may be added in an amount of 1.0 - 100 parts by weight, preferably, 5 - 50 parts by weight. As the alcohol, it is possible to use suitably methyl alcohol, ethyl alcohol, isopropyl alcohol, butyl alcohol, ethylene glycol, propylene glycol or the like. The addition of the alcohol can bring about extremely meritorious practical effects such that the viscosity of the coating composition is lowered, the leveling properties are improved, defoaming effects are obtained, and degasification effects are exhibited for hydrogen gas which would be formed through the above-mentioned reaction between the acid and metal.

As exemplary additives which may be added to the rust preventive coating composition of this invention, may be mentioned a film-forming aid formed of carbitol or the like and employed to improve the film-forming property at low temperatures such as 0 - 10°C, thickener, plasticizer, pigment, silica, clay, etc.

The rust preventive coating composition of this invention is useful as a paint or primer for coating metals, especially, iron and its alloys. The vehicle of the rust preventive coating composition is formed of the vinylidene chloride copolymer obtained from the monomer mixture of the specific composition. Accordingly, the resulting coating film has extremely good barrier properties. Since the vinylidene chloride copolymer latex is acidic owing to the inclusion of hydrochloric acid, excellent cleaning effects are exhibited for the surface of the article to be coated and strong adhesion to the surface of the article is assured. Owing to the inclusion of the tannic substance, the tannic substance bonds chemically to the metal surface of the article so that a passive-state substance is formed. As a result of these effects, it is possible to obtain extremely good rust preventive effects. In addition, the chelating reaction is promoted by the addition of the organic acid. By the incorporation of the alcohol in a suitable amount, the handling and use of the composition as a paint are facilitated so that the composition becomes very convenient from the practical viewpoint.

Moreover, the vinylidene chloride latex is prepared in accordance with the so-called seed polymerization technique. It is hence possible to enlarge the sizes of latex particles so that latex particles of 500 - 2,000 Å suitable as a vehicle can be obtained without fault. The specific and special emulsifiers are used respectively for the former-stage polymerization and latter-stage polymerization. Even when the tannic substance, organic acid and alcohol, which are all undesirable for the stability of the latex, are incorporated, the latex particles are not caused to coagulate so that an extremely stable coating composition is obtained. As reasons for this advantage, it may be contemplated in particular that the emulsifier in the latter-stage polymerization is polymerizable and is hence contained as a constituent in the latex particles, thereby to show its latex-stabilizing effects more effectively.

Since the above-mentioned vinylidene chloride latex is stable, it does not undergo abrupt coagulation by iron ions formed as a result of dissolution of iron when applied as a vehicle to the surface of an article. An extremely beautiful coating surface can therefore be obtained.

A vinylidene chloride latex generally shows strong acidity (pH: about 1.5 - 3). Even when the tannic substance is mixed singly or in combination with the organic acid and/or alcohol, the latex can form a stable coating composition without coagulation and can hence provide excellent coatability. Moreover, the vinylidene chloride latex cooperates with the tannic substance and organic acid to show excellent rust preventive effects. This is very surprising in view of the fact that an acidic substance is generally considered to promote the occurrence of rust on the contrary.

[Examples]

Examples of this invention will hereinafter be described. It should however be borne in mind that the present invention is not necessarily limited to the following Examples. In the following Examples, all designations of "part" or "parts" mean part or parts by weight.

Example 1:

(1) Preparation of Vinylidene Chloride Latex A:

Former-stage polymerization:

| | parts |
|---|---|
| Deionized water | 80 |
| Sodium alkyldiphenyletherdisulfonate ("Newcoal 271A", trade name; product of Nippon Nyukazai Co., Ltd.) | 0.15 |
| Potassium persulfate | 0.01 |
| Sodium hydrogensulfite | 0.01 |

The above materials were charged in a glass-lined autoclave equipped with stirring blades, followed by thorough purging of the interior of the autoclave with nitrogen gas. The following materials were then charged additionally under pressure, and the contents were stirred at 45°C for 10 hours to conduct emulsion polymerization, thereby preparing a latex.

| | parts |
|---|---|
| Vinylidene chloride | 18 |
| Butyl acrylate | 2 |

Latter-stage polymerization:

The following materials were added under pressure to the latex obtained in the former-stage polymerization.

| | parts |
|---|---|
| Deionized water | 15 |
| Sodium styrenesulfonate | 0.15 |
| Potassium persulfate | 0.01 |
| Sodium hydrogensulfite | 0.005 |

In addition, the following materials were also charged under pressure.

| | parts |
|---|---|
| Vinylidene chloride | 34 |
| Butyl acrylate | 4.0 |
| Glycidyl methacrylate | 2.0 |

The contents were stirred at 45°C for 10 hours to conduct emulsion polymerization, thereby preparing a latex.

The following materials were added further under pressure to the latex obtained above.

| | parts |
|---|---|
| Deionized water | 15 |
| Sodium styrenesulfonate | 0.15 |
| Potassium persulfate | 0.02 |
| Sodium hydrogensulfite | 0.01 |
| Vinylidene chloride | 34 |
| Butyl acrylate | 4.5 |
| Glycidyl methacrylate | 1.0 |
| Acrylic acid | 0.5 |

The contents were stirred at 45°C for 10 hours to conduct emulsion polymerization, thereby obtaining the intended vinylidene chloride latex. This will be called "Latex A". The polymerization yield was approximately 99.5% and the pH was 2.1. The average particle size of the latex was 0.16 µm.

(2) Mixing:

Aqueous solutions of the following materials were added successively in the following order to 100 parts solids of Latex A (this formulation will be called "Formulation 1").

| | parts |
|---|---|
| Tannic acid | 6 |
| Acetic acid | 2 |
| Isopropyl alcohol | 20 |

The resultant mixture was stirred gently to produce Rust Preventive Coating Composition 1 of this invention.

(3) Evaluation:

Iron plates of 7 cm wide, 15 cm long and 1 mm thick were separately brush-coated with Rust Preventive Coating Composition 1, followed by drying at 20°C. The above procedure was repeated to form a coating film of 40 σm thick.

Immediately after the coating, the coating composition once turned to a milky white color. Concurrently with the formation of a coating film, the color changed to black and a glossy coating film was formed. These changes may be explained as follows. A fresh surface of the iron plate was exposed as a result of dissolution of the iron plate by acidity of the coating composition. The tannic acid immediately bonded to the fresh surface to form a chelate.

The thus-coated iron plates were subjected to a water proofness test and salt water resistant test respectively in accordance with the methods prescribed in JIS K 5400 7.2 and 7.6. One of the coated iron plates was immersed for 48 hours in water of 40°C in the water proofness test, while the other coated iron plate was dipped for 96 hours in salt water of 20°C. No abnormality was observed in both tests. Occurrence of red rust was still unobserved even when immersed for 800 hours in salt water.

Example 2:

Aqueous solutions of the following materials were added successively in the following order to 100 parts solids of Latex A obtained in Example 1.

| | parts |
|---|---|
| Tannic acid | 6 |
| E.D.T.A. | 2 |
| Nitric acid | 1 |
| Acetic acid | 1 |
| Isopropyl alcohol | 30 |

The resultant mixture was stirred gently to produce Rust Preventive Coating Composition 2 of this invention.

Example 3:

Aqueous solutions of the following materials were added successively in the following order to 100 parts solids of Latex A obtained in Example 1.

| | parts |
|---|---|
| Tannic acid | 40 |
| Formic acid | 2 |
| Isopropyl alcohol | 50 |

The resultant mixture was stirred gently to produce Rust Preventive Coating Composition 3 of this invention.

Example 4:

A vinylidene chloride latex was obtained by conducting emulsion polymerization in exactly the same manner as in Example 1 except that the proportions of the monomers were changed as shown below. The latex will be called "Latex B". The polymerization yield was approximately 99.5% and the pH was 2.2. The average particle size of the latex was 0.14 µm.

Former-stage polymerization

| | parts |
|---|---|
| Vinylidene chloride | 10 |
| Ethyl acrylate | 9.0 |
| Glycidyl methacrylate | 1.0 |

First step of latter-stage polymerization

| | parts |
|---|---|
| Vinylidene chloride | 25 |
| Ethyl acrylate | 13.5 |
| Glycidyl methacrylate | 1.0 |
| Acrylic acid | 0.5 |

Second step of latter-stage polymerization

| | parts |
|---|---|
| Vinylidene chloride | 25 |
| Ethyl acrylate | 13.5 |
| Glycidyl methacrylate | 1.0 |
| Acrylic acid | 0.5 |

Using Latex B thus obtained, Rust Preventive Coating Composition 4 of this invention was produced in accordance with Formulation 1 in Example 1.

Example 5:

A vinylidene chloride latex was obtained in the same manner as in Example 1 except that 0.15 parts of sodium alkylallylsulfosuccinate were used respectively in place of the 0.15 parts sodium styrenesulfonate as emulsifiers for the first and second steps in the latterstage polymerization in Example 1. The latex will be called "Latex C". The polymerization yield was approximately 99.0% and the pH was 2.2. The average particle size of the latex was 0.16 µm.

Using Latex C thus obtained, Rust Preventive Coating Composition 5 of this invention was produced in accordance with Formulation 1 in Example 1.

Iron plates were separately coated with the above-obtained Rust Preventive Coating Compositions 2 - 5 in the same manner as in Example 1. The appearances of the resulting coating films were observed. In addition, their water proofness tests and salt water resistant tests were also conducted. Results are tabulated in Table 1.

Comparative Example 1:

Using Latex A, which had been obtained in Example 1, directly as a paint, an iron plate was coated in the same manner as in Example 1. As a result, a transparent coating film was formed. The thus-coated iron plate was subjected to the same salt water resistant test as that conducted in Example 1. Occurrence of numerous pale yellow flecks of 1 - 2 cm across was observed.

Example 6:

Aqueous solutions of the following materials were added successively in the following order to 100 parts solids of Latex A obtained in Example 1, thereby obtaining a coating composition free of any organic acid.

| | parts |
|---|---|
| Tannic acid | 6 |
| Isopropyl alcohol | 20 |

Iron plates were coated with the above coating composition in the same manner as in Example 1. Glossy and transparent coating films were formed. Three hours later, they however turned to a pale gray color. After an elapsed time of 7 days, they turned to a black color as a whole and local differences in color density were also observed. The thus-coated iron plates were then subjected to the same water proofness test and salt water resistant test as those conducted in Example 1. Although occurrence of red rust was not observed, occurrence of small black flecks was observed in both tests. This can be attributed to the slow chelating velocity of tannin due to lack of any organic acid in the coating composition. Its rust preventive effects are however practically satisfactory.

Comparative Example 2:

A vinylidene chloride latex was obtained in the same manner as in Example 1 except that 0.15 parts of sodium alkyldiphenyletherdisulfonate were used respectively in place of the 0.15 parts of sodium styrenesulfonate as emulsifiers for the first and second steps in the latter-stage polymerization in Example 1. The latex will be called "Latex D". The polymerization yield was approximately 99.5% and the pH was 2.2. The average particle size of the latex was 0.16 µm.

A comparative rust preventive coating composition was obtained by adding 6 parts of tannic acid to 100 parts of Latex D, both, in terms of solids.

Iron plates were then coated with the comparative rust preventive coating composition in the same manner as in Example 1. Minute ruggedness was formed throughout the resultant coating films so that the coating films were in a dull and mat form. The formation of the minuted ruggedness seems to be attributable to occurrence of abrupt salting-out on the iron plates. These coating films took many hours until their color changed from gray to black. The thus-coated iron plates were also subjected to the same water proofness test and salt water resistant test as those conducted in Example 1. Occurrence of red rust was not observed.

No polymerizable emulsifier was used as the emulsifier for the latter-stage polymerization upon preparation of the vinylidene chloride latex. The coating films had poor appearance and the practical utility of the coating composition of this Comparative Example as a paint was thus low, although its rust preventive effects could be acceptable.

Comparative Example 3:

When 6 parts of tannic acid were added to 100 parts solids of Latex D and 2 parts of acetic acid were added further as a 30% aqueous solution, the latex was decomposed. As demonstrated here, a latex prepared by using an ordinary anionic emulsifier only lacks chemical stability and an incorporation of an organic acid does not permit formation of any stable coating composition.

Comparative Example 4:

A comparative latex which did not contain vinylidene chloride as a component was prepared in the following manner.

Former-stage polymerization:

| | parts |
|---|---|
| Deionized water | 80 |
| Sodium alkyldiphenyletherdisulfonate ("Newcoal 271A") | 0.15 |
| Potassium persulfate | 0.01 |
| Sodium hydrogensulfite | 0.01 |

The above materials were charged in a glass-lined autoclave equipped with stirring blades, followed by thorough purging of the interior of the autoclave with nitrogen gas. The following materials were then charged additionally under pressure, and the contents were stirred at 45°C for 10 hours to conduct emulsion polymerization, thereby preparing a latex.

| | parts |
|---|---|
| Styrene | 4.0 |
| Methyl methacrylate | 6.0 |
| Butyl acrylate | 10.0 |

Latter-stage polymerization:

The following materials were added under pressure to the latex obtained in the former-stage polymerization.

| | parts |
|---|---|
| Deionized water | 25 |
| Sodium styrenesulfonate | 0.15 |
| Potassium persulfate | 0.01 |
| Sodium hydrogensulfite | 0.005 |

In addition, the following materials were also charged under pressure.

| | parts |
|---|---|
| Styrene | 8.0 |
| Methyl methacrylate | 10.0 |
| Butyl acrylate | 20.0 |
| Glycidyl methacrylate | 2.0 |

The contents were stirred at 45°C for 10 hours to conduct emulsion polymerization, thereby preparing a latex.

The following materials were added further under pressure to the latex obtained above.

| | parts |
|---|---|
| Deionized water | 25 |
| Sodium styrenesulfonate | 0.15 |
| Potassium persulfate | 0.02 |
| Sodium hydrogensulfite | 0.01 |
| Styrene | 8.0 |
| Methyl methacrylate | 10.5 |
| Butyl acrylate | 20.0 |
| Glycidyl methacrylate | 1.0 |
| Methacrylic acid | 0.5 |

The contents were stirred at 45°C for 10 hours to conduct emulsion polymerization, thereby obtaining a comparative latex. This will be called "Latex E". The pH of Latex E was 4, and the average particle size of the latex was 0.15 µm.

Using Latex E, a comparative rust preventive coating composition was obtained in accordance with Formulation 1 in Example 1.

Iron plates were coated and dried in the same manner as in Example 1 except for the use of the above comparative coating composition. The thus-coated iron plates were also subjected to the same water proofness test and salt water resistant test as those conducted in Example 1. Occurrence of red rust was observed over the entire surfaces of the iron plates in both tests.

Example 7:

An aqueous solution of the following material was added to 100 parts solids of Latex A obtained in Example 1, thereby obtaining a coating composition free of both organic acid and alcohol.

| | parts |
|---|---|
| Tannic acid | 6 |

Iron plates were then coated with the coating composition in the same manner as in Example 1, thereby forming coating films which were a little inferior in smoothness but were glossy and transparent. The somewhat poor smoothness of the coating films can be attributed to poor leveling properties due to lack of any alcohol in the coating composition.

The thus-coated iron plates were also subjected to the same water proofness test and salt water resistant test as those conducted in Example 1. Occurrence of red rust was not observed, and rust preventive effects satisfactory from the practical viewpoint were achieved. However, the coating composition was a little dissatisfactory in that its practical utility was somewhat inferior as a paint and the chelating velocity of tannin was slow.

Example 8:

Aqueous solutions of the following materials were added to 100 parts solids of Latex A obtained in Example 1, thereby obtaining a coating composition which contained an organic acid but did not contain any alcohol.

| | parts |
|---|---|
| Tannic acid | 6 |
| Acetic acid | 2 |

Iron plates were then coated with the coating composition in the same manner as in Example 1, thereby forming coating films which were a little inferior in smoothness but were glossy and transparent. The somewhat poor smoothness of the coating films can be attributed to poor leveling properties due to lack of any alcohol in the coating composition.

The thus-coated iron plates were also subjected to the same water proofness test and salt water resistant test as those conducted in Example 1. The chelating velocity of tannin was fast, occurence of red rust was not observed, and rust preventive effects satisfactory from the practical viewpoint were achieved. However, the coating composition was a little dissatisfactory in that its practical utility was somewhat inferior as a paint.

Table 1

| Ex. | Formulation | | | | | | | |
|---|---|---|---|---|---|---|---|---|
| | Latex | | Tannic acid | Organic acid | | Isopropyl alcohol | Others | |
| | Kind | (Parts) | (Parts) | Kind | (Parts) | (Parts) | Kind | (Parts) |
| Ex.1 | A | 100 | 6 | Acetic acid | 2 | 20 | - | - |
| Ex.2 | A | 100 | 6 | Acetic acid | 1 | 30 | EDTA<br>$HNO_3$ | 2<br>1 |
| Ex.3 | A | 100 | 40 | Formic acid | 2 | 50 | - | - |
| Ex.4 | B | 100 | 6 | Acetic acid | 2 | 20 | - | - |
| Ex.5 | C | 100 | 6 | Acetic acid | 2 | 20 | - | - |
| Comp. Ex.1 | A | 100 | - | - | - | - | - | - |
| Ex.6 | A | 100 | 6 | - | - | 20 | - | - |
| Comp. Ex.2 | D | 100 | 6 | - | - | - | - | - |
| Comp. Ex.3 | D | 100 | 6 | Acetic acid | 2 | - | - | - |
| Comp. Ex.4 | E | 100 | 6 | Acetic acid | 2 | 20 | - | - |
| Ex.7 | A | 100 | 6 | - | - | - | - | - |
| Ex.8 | A | 100 | 6 | Acetic acid | 2 | - | - | - |

Table 1 cont'd

| Ex. | Test results: Appearance of coating film immediately after its coating | Test results: Water proofness test | Test results: Salt water resistant test | Overall Evaluation |
|---|---|---|---|---|
| Ex.1 | Glossy/black | Not rusted | Not rusted | Excellent |
| Ex.2 | Glossy/black | Not rusted | Not rusted | Excellent |
| Ex.3 | Glossy/black | Not rusted | Not rusted | Excellent |
| Ex.4 | Glossy/black | Not rusted | Not rusted | Excellent |
| Ex.5 | Glossy/black | Not rusted | Not rusted | Excellent |
| Comp.Ex.1 | Glossy/transparent/ colorless | Pale yellow flecks occurred | Pale yellow flecks occurred | Unsuitable |
| Ex.6 | Glossy/transparent/ colorless | Black flecks occurred | Black flecks occurred | Good |
| Comp.Ex.2 | Mat/colorless | Not rusted | Not rusted | Unsuitable |
| Comp.Ex.3 | Failed to form coating film | - | - | Poor |
| Comp.Ex.4 | Glossy/black | Red rust occurred in the form of spots | Red rust occurred over the entire surface | Poor |
| Ex.7 | Glossy/transparent/ colorless | Black flecks occurred | Black flecks occurred | Good |
| Ex.8 | Glossy/black | Not rusted | Not rusted | Good |

## Claims

1. A rust preventive coating composition comprising, in terms of solids, 100 parts by weight of a vinylidene chloride latex and 0.5 - 50 parts by weight of a tannic substance, said vinylidene chloride latex having been obtained by emulsion-polymerizing in the presence of 0.05 - 0.5 parts by weight of an anionic emulsifier a 10 - 50 parts by weight portion of 100 parts by weight of a monomer mixture composed of 20 - 95 wt.% of vinylidene chloride and 5 - 80 wt.% of a monomer copolymerizable with vinylidene chloride to obtain a latex, adding the remaining portion of the monomer mixture and 0.1 - 3.0 parts by weight of a polymerizable emulsifier formed of at least one of styrene sulfonic salts and alkylallylsulfosuccinic salts to the thus-obtained latex and then emulsion-polymerizing the resultant mixture.

2. The rust preventive coating composition as claimed in Claim 1, further comprising 0.05 - 20 parts by weight of an organic acid.

3. The rust preventive coating composition as claimed in Claim 1, further comprising 1.0 - 100 parts by weight of an alcohol.

4. The rust preventive coating composition as claimed in Claim 1, further comprising 0.05 - 20 parts by weight of an organic acid and 1.0 - 100 parts by weight of an alcohol.

5. The rust preventive coating composition as claimed in Claim 1, wherein the vinylidene chloride latex has been obtained by emulsion-polymerizing a monomer mixture composed of 50 - 93 wt.% of vinylidene chloride and 7 - 50 wt.% of a monomer copolymerizable with vinylidene chloride.

6. The rust preventive coating composition as claimed in Claim 1, wherein the vinylidene chloride latex has been obtained by emulsion-polymerizing a monomer mixture composed of 60 - 92 wt.% of vinylidene chloride and 8 - 40 wt.% of a monomer copolymerizable with vinylidene chloride.

7. The rust preventive coating composition as claimed in Claim 1, wherein the monomer mixture to be emulsion-polymerized in the presence of the anionic emulsifier contains glycidyl acrylate or methacrylate as a monomer copolymerizable with vinylidene chloride.

8. The rust preventive coating composition as claimed in Claim 1, wherein the polymerizable emulsifier is formed of at least one of sodium styrenesulfonate and sodium alkylallylsulfosuccinate.

9. The rust preventive coating composition as claimed in Claim 1, further comprising at least one of a chelating agent and an inorganic acid, each, in an amount of at most 5 parts by weight.

10. The rust preventive coating composition as claimed in Claim 1, wherein the tannic substance is contained in a proportion of 2.0 - 20 parts by weight per 100 parts by weight of the vinylidene chloride latex, both, in terms of solids.

11. The rust preventive coating composition as claimed in Claim 1, wherein the tannic substance is tannin or tannic acid.

12. The rust preventive coating composition as claimed in Claim 1, wherein the pH of the vinylidene chloride latex is 1.5 - 3.

13. The rust preventive coating composition as claimed in Claim 1, wherein the particle sizes of latex particles of the vinylidene chloride latex are 500 - 2,000 Å.

14. The rust preventive coating composition as claimed in Claim 1, wherein the coating composition is suitable for use in coating a surface of iron or an iron alloy.

15. A process for the production of a rust preventive coating composition, which comprises the following steps:

preparing a vinylidene chloride latex of pH 1.5 - pH 3 in accordance with a polymerization technique including steps of emulsion-polymerizing in the presence of 0.05 - 0.5 parts by weight of an anionic emulsifier a 10 - 50 parts by weight portion of 100 parts by weight of a monomer mixture composed of 20 - 95 wt.% of vinylidene chloride and 5 - 80 wt.% of a monomer copolymerizable with vinylidene chloride to obtain a latex, adding the remaining portion of the monomer mixture and 0.1 - 3.0 parts by weight of a polymerizable emulsifier formed of at least one of styrenesulfonic salts and alkylallylsulfosuccinic salts to the thus obtained latex, and then emulsion-polymerizing the resultant mixture; and

adding 0.5 - 50 parts by weight of a tannic substance to 100 parts by weight of the vinylidene chloride latex, both, in terms of solids.

16. The process as claimed in Claim 15, wherein 0.05 - 20 parts by weight of an organic acid and/or 1.0 - 100 parts by weight of an alcohol are added further along with 0.5 - 50 parts by weight of the tannic substance to 100 parts by weight of the vinylidene chloride latex, the latter two, in terms of solids.